# EUROPEAN PATENT SPECIFICATION

(11) **EP 1 791 753 B1**
(45) Date of publication and mention of the grant of the patent: **13.01.2010**
(21) Application number: 05774868.3
(22) Date of filing: 19.08.2005
(51) Int. Cl.: B62M 23/02

(54) **HYBRID MOTORBIKE POWERED BY MUSCLE POWER AND AN ELECTRIC MOTOR WITH THE CURRENT GENERATED BY A FUEL CELL**
HYBRIDMOTORRAD MIT MUSKELKRAFT- UND ELEKTROMOTORANTRIEB MIT VON EINER BRENNSTOFFZELLE ERZEUGTEM STROM
MOTO-CROSS HYBRIDE ACTIONNÉE PAR LA FORCE MUSCULAIRE ET PAR UN MOTEUR ÉLECTRIQUE DONT LE COURANT EST GÉNÉRÉ PAR UNE PILE À COMBUSTIBLE

(30) Priority: 20.08.2004 US 603415 P
(43) Date of publication of application: 06.06.2007
(73) Proprietor: Naegeli, Hans Peter, 9010 Affoltern a./A. (CH)
(72) Inventor: Naegeli, Hans Peter, 9010 Affoltern a./A. (CH)
(74) Representative: Moore, Christopher Mark
(86) International application number: PCT/EP2005/009009
(87) International publication number: WO 2006/018317

(56) References cited:
- EP-A- 1 164 049
- EP-A- 1 398 263
- US-A- 5 242 335
- US-B1- 6 286 616
- PATENT ABSTRACTS OF JAPAN vol. 2003, no. 01, 14 January 2003 (2003-01-14) & JP 2002 249090 A (YAMAHA MOTOR CO LTD), 3 September 2002 (2002-09-03)
- PATENT ABSTRACTS OF JAPAN vol. 1996, no. 09, 30 September 1996 (1996-09-30) & JP 08 119180 A (MATSUSHITA ELECTRIC IND CO LTD), 14 May 1996 (1996-05-14)
- PATENT ABSTRACTS OF JAPAN vol. 2000, no. 21, 3 August 2001 (2001-08-03) & JP 2001 095109 A (TOSHIBA CORP), 6 April 2001 (2001-04-06)
- PATENT ABSTRACTS OF JAPAN vol. 2003, no. 04, 2 April 2003 (2003-04-02) & JP 2002 362470 A (YAMAHA MOTOR CO LTD), 18 December 2002 (2002-12-18)

## Description

### BACKGROUND OF THE INVENTION

### Field of the Invention

This invention relates to a bicycle or motorbike which has a hybrid propulsion system of muscle power and an electric motor supplied with current generated by a fuel cell. The fuel cell and battery and controls are contained in a module that fits in the triangular space formed by the frame of the bicycle between the front wheel of the bicycle and the seat.

### Description of the Prior Art

U. S. Patent No. 5,242,335 (Kutter*)* ('335) discloses a bicycle driven by muscle power and an electric motor. This patent discloses a unique planetary gear train on the drive wheel for utilizing both the power of an electric motor and muscle power.

U.S. Patent No. 6,286,616 (Kutter*)* ('616), discloses a hybrid motorbike with an electric motor which has a rotor and a stator in the drive wheel for utilizing both muscle power and electric power.

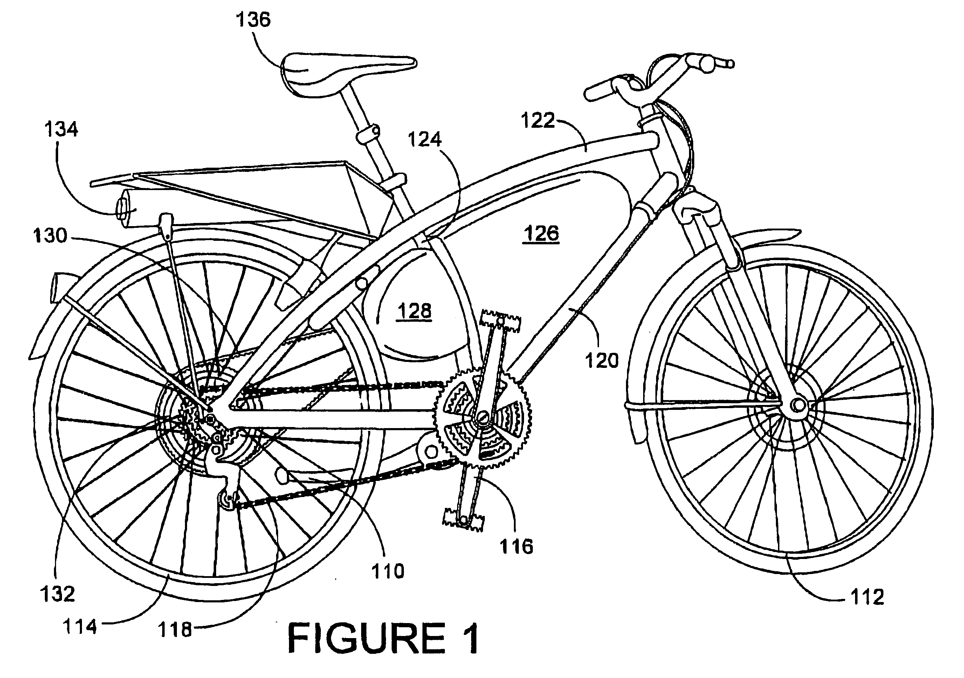

Japanese Publication No. 2002249090, dated 03/09/02 discloses a power assisted bicycle which has a fuel cell, battery and electric motor for powering the rear wheel. The rear wheel can also be powered by pedals. As shown in FIG. 1 the electric motor 21 and the pedal 27 both drive the rear wheel with chain 12.

### SUMMARY OF THE INVENTION

This invention provides a fuel cell for producing electricity to drive an electric motor powering a drive wheel of a two wheel vehicle, such as a motorbike or bicycle. The fuel cell and battery and controls for controlling the fuel cell and the electric motor can be placed in a module in the triangular opening formed by the frame of the bicycle between the front wheel and the rider's seat. This allows for easy replacement of the fuel cells and battery. Fuel cells will supply current to the electric motor.

The combination of the fuel cell and battery to supply current for the electric motor can be us with any hybrid motorbike that has a mechanism for utilizing both muscle power and power supplied by an electric motor. For example, this can be used with a planetary-gear train on the drive wheel as disclosed in the'335 patent. It can also be used where the electric motor is incorporated in the hub of the drive wheel supplied through the rotor and stator by the electric motor and muscle power as disclosed in the '616 patent.

### BRIEF DESCRIPTION OF THE Drawings

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is an embodiment of a motorbike of this invention being displayed by a gentleman.

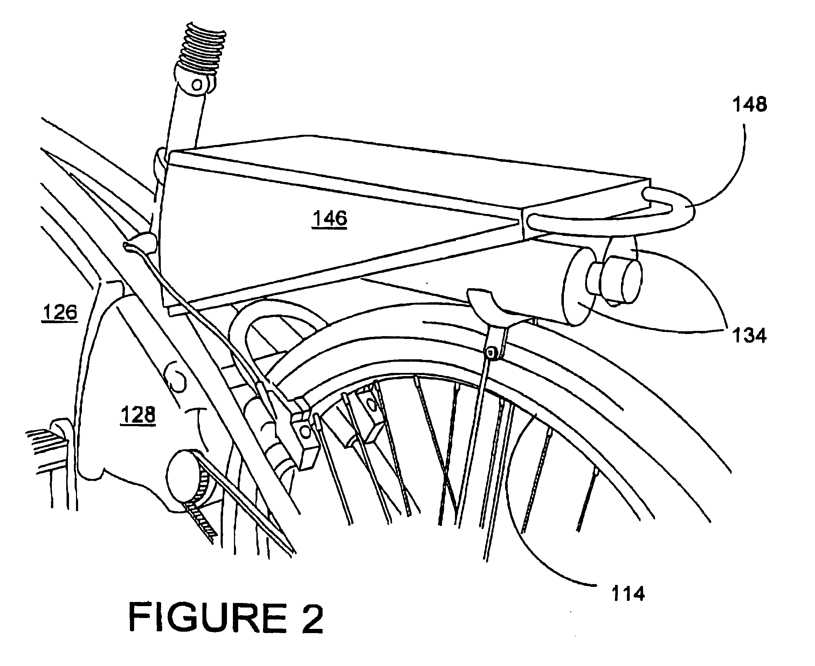

FIG. 2 shows a part of the rear wheel and the fuel tank module for the fuel cell.
FIG. 3 illustrates the motorbike of this invention with the cover removed from the power module on one side.

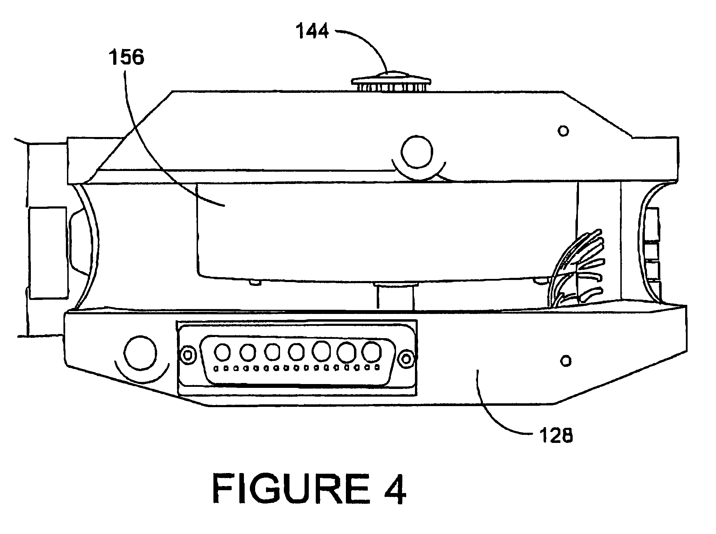

FIG. 4 shows the electric motor used to partially power the motorbike of this invention.

### DETAILED DESCRIPTION OF THE PREFERRED EMBODIMENT

The embodiment shown in FIG. 1 shows a motorbike with a hybrid propulsion system. The hybrid motorbike 110 has a conventional frame and wheels with a front wheel 112, and a rear wheel 114 to which power is supplied. The motorbike has pedals 116 for supplying muscle power from the rider through a conventional gear on the pedal crank to which a pedal drive chain 118 is connected.
The frame of the bicycle has a bottom front fork 120 and a top front fork 122 which are supported and reinforced by a back connecting base 124. A power module 126 is supported in the triangular space formed by 120, 122, and 124. This power module 126 can be detached to the frame of the bicycle by any conventional means, such as bolts, which permit easy removal and installation. This bicycle has an electric motor 156 which is located immediately back of the back connecting base 124. A plastic motor drive belt 130 with teeth drives the rear wheel 114 of the motorbike. This motorbike has a seat 136 for the rider.

This motorbike 110 has a planetary-gear train 132. This planetary-gear train 132 is very similar to the planetary-gear train shown in FIG. 1 of the '335 patent. The crown gear (6) as shown in FIG. 1 of the '335 patent is driven by the pedal drive chain 118. The sun wheel (3) is driven by the motor drive belt 130 or chain. The planetary-gear train 132 allows both the supply of muscle power and power from the electric motor to be used in a complementary fashion.

This motorbike 110 is partially powered by one or more fuel cells 150 which operate on hydrogen. The hydrogen fuel tanks 134 are supported in a fuel tank module 146 attached to the rear of the bike. This fuel tank module 146 has a handle 148 for easy removal for exchange for a new module. This module 146 includes two hydrogen fuel tanks 134.

The hydrogen fuel tanks can store the hydrogen in the form of a hydrogen carbide, such as iron carbide, at relatively low pressure. These tanks 134 can be used to refuel from any convenient hydrogen source. It should be realized that high pressure hydrogen tanks may also be used.

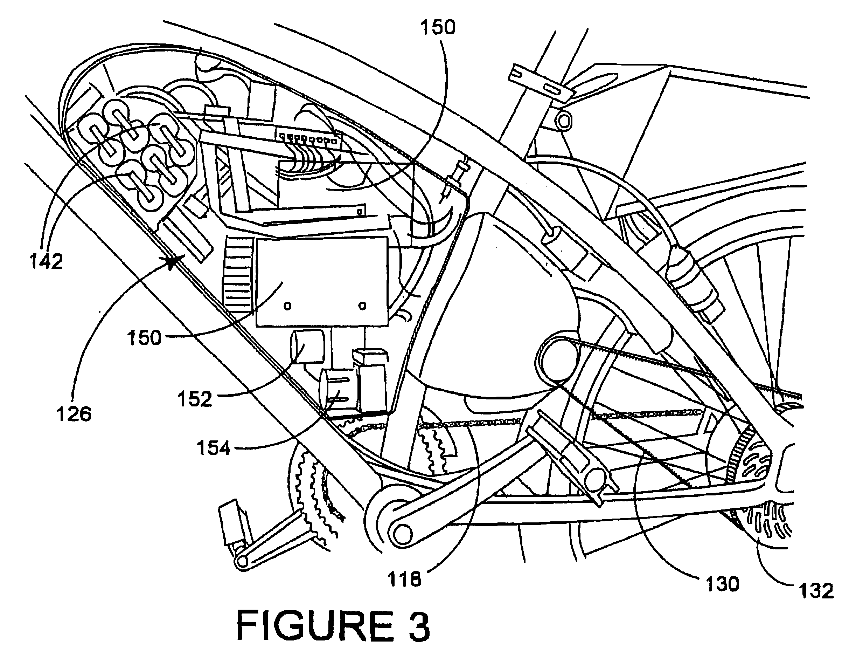

The power module 126 is shown in FIG. 3. It includes several batteries 142 and a stack of fuel cells 150 as shown in FIG. 3. There may be controls for starting and stopping the fuel cells 150. The power module 126 can also include controls for turning the electric motor on and off. The power module 126 can be attached to the back connecting base 124, top front fork 122 or the bottom front fork 120. When the battery or fuel cell expires or fails to operate, the entire module can be replaced. While the power module is the most convenient way to carry the fuel cells 150, it should be realized that the fuel cell or cells and the battery can be mounted on the bike without the use of a power module. The current produced by the fuel cells is transmitted to the twenty-four volt electric motor 156 with any supplemental power used to charge the battery. A regulator, (not shown) can be used to control the distribution of current to the battery and to the electric motor 156 as desired. The electric motor 156 is encased in a case 128 which is attached to the frame of the bike. Controls can also be provided to automatically turn the fuel, cells on and off in order to conserve fuel. This feature is not shown in the figures.
The fuel cells used in this invention use hydrogen from the hydrogen fuel tanks 134 and obtain oxygen from the air. The hydrogen can be pumped by pump 152 to the fuel cell. Air can be pumped to the fuel cells by air pump 154. The hydrogen and oxygen are combined in the fuel cell 142 to produce electricity with water vapor being the by-product. Since only water vapor is a by product, no pollution of the atmosphere occurs in the use of this invention. While it is preferred that the fuel cell operate on hydrogen and oxygen, it should be realized that other types of fuel cells that produce electricity could be used as well. In the case of a fuel cell that uses hydrogen and oxygen, the oxygen is obtained from the atmosphere. Suitable wiring connects the electric controls the battery to the electric motor.
The electric motor 156 has a motor gear drive 144 to which the motor drive belt 130 is engaged. This electric motor can be a brushless d.c motor or other type of DC motor. This invention is not limited to a DC motor as other types of motors can be utilized by converting the current from the fuel cell to AC.

This motorbike is extremely efficient in that testing of the motorbike has confirmed that only 45 grams of hydrogen is needed to assist in powering the motorbike a distance of 125 kilometers.

The battery, or batteries, 142 can be a nickel cadmium battery or a long lasting lithium battery.
It should be pointed out that because of the small amount of hydrogen that is used, it is possible to use a small hydrogen generating unit in the home or garage to generate the hydrogen to fill the tanks. The hydrogen could be generated by electrolysis of water. Alternatively, it could be generated by a reformer of a mixture of methanol and water.
The battery used in this motorbike can be a 12 or 24 volt battery.
The turning of the motor on and off or to regulate its speed to assist in powering the bike can be controlled by software that determines the load on the pedals and their rpm to either supply power from the electric motor or not and how much power to supply. This microcomputer can be housed in the power module or with the electric motor to use this software. A manual control can override the software in determining when the motor is turned on or off.

## Claims

1. A two wheel motor vehicle (110) powered at least in part by a fuel cell (150) comprising:
a vehicle frame supporting a seat (136), a front wheel (112) and a rear drive wheet (114), a front axle supporting the front wheel (112) and a rear axle supporting the rear wheel (114), the frame forming an opening between the wheels (112,114), a pedal crank (116) powered by muscle power, a fuel cell (150) and a battery (142), an electric motor (156) for powering the drive wheel (114) and control means for controlling the power to the drive wheel (114), and a fuel tank (134); where the control means, fuel cell (150) and battery (142) are contained within a detachable power module (126) attached to the frame in the opening between the wheels (112, 114) said vehicle having a control to regulate the fuel cell (150) and a control to regulate the speed of the electric motor (156), **characterised in that** the drive wheel (114) has a planetary-gear train (132) having sun wheel (3) driven by said electric motor (156), a crown gear (6) driven by said muscle power, and a planetary-gear carrier (5), said planetary gear carrier (5), providing a power take-off to the drive wheel (114), and the vehicle comprises sensors to determine the speed of and load placed on the pedals (116) and transmit this information to a microprocessor in the vehicle which has been programmed to control the speed of the electric motor (156) according to the load on the pedals (116) and their speed so as to provide the desired assistance in pedalling the vehicle (110).

2. The two wheel motor vehicle of Claim 1, in which the electric motor (156) drives the sun wheel (3) by a motor drive belt (130) and the crown gear (6) is driven by a pedal drive chain (118) attached to a gear on the pedal crank (116) which is driven by muscle power.

## Patentansprüche

1. Zweiradmotorfahrzeug (110), welches wenigstens zum Teil durch eine Brennstoffzelle (150) angetrieben wird, und welches Folgendes enthält:
Einen Fahrzeugrahmen, der einen Sitz (136), ein Vorderrad (112) und ein hinteres angetriebenes Rad (114) trägt, wobei eine Vorderachse das Vorderrad (112) und eine Hinterachse das hintere Rad (114) trägt, und der Rahmen eine Öffnung zwischen den Rädern (112, 114) bildet, eine Pedalkurbel (116), die durch Muskelkraft angetrieben wird, eine Brennstoffzelle (150) und eine Batterie (142), einen Elektromotor (156) zum Antrieb des Antriebsrades (114) und Steuermittel zur Steuerung der Leistung zum Antriebsrad (114), und einen Brennstofftank (134); wobei die Steuermittel, die Brennstoffzelle (150) und die Batterie (142) in einem entfernbaren Leistungsmodul (126) aufgenommen sind, das an dem Rahmen in der Öffnung zwischen den Rädern (112, 114) befestigt ist, wobei das Fahrzeug eine Steuerung zur Regulierung der Brennstoffzelle (150) und eine Steuerung zur Regulierung der Geschwindigkeit des Elektromotors (156) enthält, **dadurch gekennzeichnet, dass** das Antriebsrad (114) ein Planetengetriebe (132) aufweist, welches ein Sonnenrad (3) enthält, das durch den Elektromotor (156) angetrieben wird, ein Planrad (6), das durch Muskelkraft angetrieben wird, und einen Planetengetriebe-Träger (5) aufweist, wobei der Planetengetriebe-Träger (5) eine Kraftabnahme zum Antriebsrad (114) ermöglicht, und das Fahrzeug Sensoren zur Bestimmung der Geschwindigkeit von und der Last auf die Pedale (116) enthält und diese Information an einen Mikroprozessor im Fahrzeug überträgt, der programmiert ist, die Geschwindigkeit des Elektromotors (156) gemäß der Last auf die Pedale (116) und ihrer Geschwindigkeit zu steuern, um die gewünschte Unterstützung beim Pedaletreten des Fahrzeugs (110) zu ermöglichen.

2. Zweiradfahrzeug nach Anspruch 1, bei dem der Elektromotor (156) das Sonnenrad (3) über einen Motorantriebsriemen (130) antreibt und das Planrad (6) durch eine Pedalantriebskette (118) angetrieben wird, das an dem Getriebe an der Pedalkurbel (116) angesetzt ist, das durch Muskelkraft angetrieben wird.

## Revendications

1. Véhicule à moteur à deux roues (110) alimenté au moins en partie par une pile à combustible (150) comprenant :
un châssis de véhicule soutenant un siège (136), une roue avant (112) et une roue arrière motrice (114), un essieu avant soutenant la roue avant (112) et un essieu arrière soutenant la roue arrière (114) le châssis formant un ouverture entre les roues (112, 114), un pédalier (116) alimenté par l'énergie musculaire, une pile à combustible (150) et une batterie (142), un moteur électrique (156) pour alimenter la roue d'entraînement (114) et des moyens de commande pour contrôler la puissance à la roue d'entraînement (114), et un réservoir à combustible (134) ; où les moyens de commande, la pile à combustible (150) et la batterie (142) sont contenus dans un module d'alimentation amovible (126) fixé au châssis dans l'ouverture entre les roues (112, 114), ledit véhicule ayant une commande pour réguler la pile à combustible (150) et une commande pour régler la vitesse du moteur électrique (156), **caractérisé en ce que** la roue d'entraînement a un engrenage planétaire (132) ayant une transmission planétaire (3) entraîné par ledit moteur électrique (156), une couronne dentée (6) entraîné par ladite puissance musculaire, et un porteur d'engrenage planétaire (5), ledit porteur d'engrenage planétaire (5), fournissant une énergie au démarrage de la roue d'entraînement (114), et le véhicule comporte des capteurs pour déterminer la vitesse et la charge placée sur les pédales (116) et transmettre ces informations à un microprocesseur placé dans le véhicule qui a été programmé pour contrôler la vitesse du moteur électrique (156) selon la charge sur les pédales (116) et leur vitesse de manière à fournir l'assistance voulue en pédalant le véhicule(110).

2. Véhicule à moteur à deux roues selon la revendication 1, dans lequel le moteur électrique (156) entraîne la transmission planétaire (3) par un moteur à courroie (130) et la couronne dentée (6) est entraîné par une chaîne d'entraînement par pédale (118) attaché à un engrenage le pédalier (116) qui sont mues par la force musculaire.
